# EUROPÄISCHE PATENTSCHRIFT

(11) **EP 2 864 661 B1**
(45) Veröffentlichungstag und Bekanntmachung des Hinweises auf die Patenterteilung: **01.02.2017**
(21) Anmeldenummer: 13729943.4
(22) Anmeldetag: 17.06.2013
(51) Int. Cl.: F16H 3/00, F16H 3/60, F16H 37/04

(54) **GETRIEBE-KUPPLUNGSEINHEIT UND VERFAHREN ZUR STEUERUNG EINER GETRIEBEANORDNUNG DAMIT**
TRANSMISSION AND CLUTCH UNIT AND CONTROL METHOD FOR A TRANSMISSION ARRANGEMENT PROVIDED THEREWITH
UNITÉ COMPRENANT UNE BOÎTE DE VITESSES ET DES EMBRAYAGES ET PROCÉDÉ DE CONTRÔLE POUR UN AGENCEMENT DE TRANSMISSION LA COMPRENANT

(30) Priorität: 22.06.2012 DE 102012210635
(43) Veröffentlichungstag der Anmeldung: 29.04.2015
(73) Patentinhaber: Deere & Company, Moline, IL 61265 (US)
(72) Erfinder: OTTEN, Ulrich, 67396 Speyer (DE)
(74) Vertreter: John Deere GmbH & Co. KG
(86) Internationale Anmeldenummer: PCT/EP2013/062488
(87) Internationale Veröffentlichungsnummer: WO 2013/189876

(56) Entgegenhaltungen:
- DE-A1-102008 030 516
- DE-A1-102008 031 456
- DE-A1-102010 029 597
- FR-A1- 2 952 590
- US-A1- 2003 148 847

## Beschreibung

Die Erfindung betrifft eine Getriebe-Kupplungseinheit, umfassend eine Eingangswelle zum Antrieb der Getriebe-Kupplungseinheit, eine erste und eine zweite Abtriebswelle, die zum Antrieb mit einer im Kraftfluss nachgeordneten Getriebeeinheit verbindbar sind, eine erste und eine zweite Kupplung mit einem gemeinsamen Kupplungsantriebselement, wobei die erste Abtriebswelle über die erste Kupplung und die zweite Abtriebswelle über die zweite Kupplung mit der Eingangswelle bedarfsweise antriebsmäßig verbindbar sind, ein Planetenradgetriebe mit einem Hohlrad und einem Planetenradträger, wobei das Hohlrad über eine Rückwärtskupplung gegenüber einem feststehenden Gehäuse der Getriebe-Kupplungseinheit gegen Drehung arretierbar ist, zur reversierenden Antriebsverbindung der Eingangswelle mit der zweiten Abtriebswelle.

Im Stand der Technik sind Getriebeanordnungen für landwirtschaftliche Arbeitsfahrzeuge, wie Traktoren, bekannt, die aus einer Kupplungsanordnung und mehreren Getriebeeinheiten bestehen, wobei die Kupplungsanordnung als Doppelkupplung gestaltet ist. In der Automobilindustrie sind solche Getriebeanordnungen als Doppelkupplungsgetriebe mit mehreren Vorwärtsgängen und einem Rückwärtsgang bekannt. Die Einsatzbedingungen von landwirtschaftlichen Arbeitsfahrzeugen machen allerdings sogenannte Reversiereinheiten erforderlich, mit denen durch eine Richtungsumkehr beziehungsweise Reversieren der Eingangsdrehrichtung für die weiteren Getriebeeinheiten mehrere Rückwärtsgänge darstellbar sind. Regelmäßig ist der Aufbau derart, dass eine Reversiereinheit mit einer dahinter angeordneten Doppelkupplung antriebsverbunden ist, wobei die beiden Abtriebe der Doppelkupplung das Drehmoment jeweils auf eine erstes Teilgetriebe mit den ungeraden Gangstufen und eine zweites Teilgetriebe mit den geraden Gangstufen verteilen.

Bezüglich des Reversierens können grundsätzlich zum einen ein länger andauernder reversierter Betrieb, in dem also bei ständig umgekehrter Drehrichtung der Eingangsdrehrichtung der weiteren Getriebeeinheiten ein Schalten der verschiedene Gangstufen in einer dieser Getriebeeinheiten erfolgt, und zum anderen ein ständiges Reversieren, in dem durch wiederholtes Betätigen der Reversiereinheit ein ständiger Wechsel der Drehrichtung der Eingangsdrehrichtung für die weiteren Getriebeeinheiten erfolgt und in dem ständig eine gleiche Gangstufe in einer dieser Getriebeeinheiten eingelegt ist, unterschieden werden. Während ein länger andauernder reversierter Betrieb beispielsweise beim Schneefräsen relevant ist, erfordern andere Einsatzbereich, beispielsweise Verdichten von Silage, ein ständiges Reversieren.

Die DE 10 2010 029 597 A1 zeigt ein Doppelkupplungsgetriebe für ein landwirtschaftliches Arbeitsfahrzeug mit einer eingangs angeordneten Reversiereinheit, die als reversierbares Doppelplanetengetriebe ausgebildet ist. Die Reversiereinheit verfügt über eine Vorwärtskupplung und eine Rückwärtskupplung. Die Reversiereinheit gibt für die nachfolgende Doppelkupplung und die dieser nachfolgenden Getriebeeinheit die Eingangsdrehrichtung vor. Das Reversieren ist für beide Reversierarten ohne Zugkraftunterbrechung möglich.

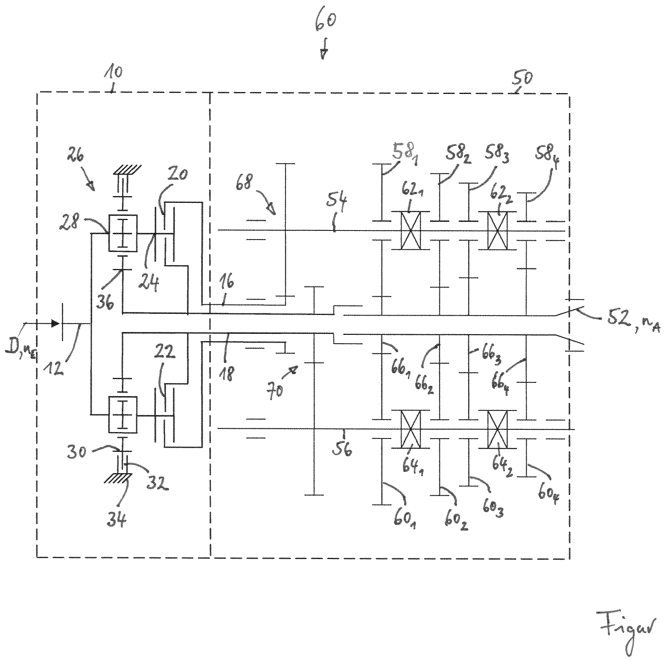

Die US 2003/148847 A1 zeigt in Figur 40 eine Getriebe-Kupplungseinheit, umfassend eine Eingangswelle, eine erste und eine zweite Abtriebswelle, die zum Antrieb mit einer im Kraftfluss nachgeordneten Getriebeeinheit verbindbar sind, eine erste und eine zweite Kupplung mit einem gemeinsamen Kupplungsantriebselement, wobei die erste Abtriebswelle über die erste Kupplung und die zweite Abtriebswelle über die zweite Kupplung mit der Eingangswelle bedarfsweise antriebsmäßig verbindbar sind, ein Planetenradgetriebe mit einem Hohlrad und einem Planetenradträger, wobei das Hohlrad über eine Rückwärtskupplung gegenüber einem feststehenden Gehäuse der Getriebe-Kupplungseinheit gegen Drehung arretierbar ist, zur reversierenden Antriebsverbindung der Eingangswelle mit der zweiten Abtriebswelle und wobei der Planetenradträger mit dem Kupplungsantriebselement um eine durch die Eingangswelle definierte Drehachse gemeinsam umlaufend verbindbar ist.

In einer im Kraftfluss nachgeordneten Getriebeeinheit mit mehreren von der ersten bzw. von der zweiten Abtriebswelle antreibbaren Gangstufen ist eine Gangstufe des niedrigsten Vorwärtsgangs von der zweiten Abtriebswelle antreibbar. Durch Reversieren der Betriebsrichtung der zweiten Abtriebswelle wird diese Gangstufe für einen Rückwärtsgang genutzt.

Zur Erzielung eines maximalen Schaltkomforts sind bei einem Doppelkupplungsgetriebe für landwirtschaftliche Arbeitsfahrzeuge nach dem Stand der Technik somit vier Reibungskupplungen vorzusehen, um die Reversierfunktion einerseits und eine Vorwahlmöglichkeit der nächsten Gangstufe im gerade nicht leistungsübertragenden Teilgetriebe andererseits darzustellen. Weiterhin sind hiermit der zuvor beschriebene länger andauernde reversierte Betrieb und das beschriebene ständige Reversieren ohne Zugkraftunterbrechung gleichermaßen möglich. Es lassen sich allerdings bestimmte Kundengruppen ausmachen, die in ihren Einsatzbereichen des landwirtschaftlichen Arbeitsfahrzeugs keinen länger andauernden reversierten Betrieb ohne Zugkraftunterbrechung benötigen und für diesen länger andauernden reversierten Betrieb mit Zugkraftunterbrechung einen ausreichenden Schaltkomfort erreichen. Für diese Kundengruppen wäre zur Einsparung von Bauraum und Kosten eine Reduzierung der Anzahl der Kupplungen unter Beibehaltung der beschriebenen Funktion des ständigen Reversierens wünschenswert.

Die Aufgabe der vorliegenden Erfindung besteht somit darin, eine Getriebe-Kupplungseinheit bereitzustellen, die einfacher und kostengünstiger aufgebaut ist.

Die Aufgabe wird gelöst durch ein Verfahren nach Anspruch 1.

Die Getriebe-Kupplungseinheit kommt in vorteilhafterweise lediglich mit drei Kupplungen aus, wodurch Bauraum und Kosten eingespart werden. Weiterhin weist die erfindungsgemäße Getriebe-Kupplungseinheit einen modularen Aufbau aus, durch den eine Vormontage getrennt von den im Kraftfluss nachfolgenden Getriebeeinheiten möglich ist.

Bevorzugt sind die Abtriebswellen konzentrisch zueinander angeordnet. Weiterhin bevorzugt ist die zweite Abtriebswelle konzentrisch innerhalb der als Hohlwelle ausgebildeten ersten Antriebswelle angeordnet. Hierdurch wird ein kompakter Aufbau der Getriebe-Kupplungseinheit erzielt.

Bevorzugt ist die zweite Abtriebswelle als Hohlwelle ausgebildet. Hierdurch kann innerhalb der zweiten Abtriebswelle eine weitere Welle angeordnet werden, beispielsweise zum Antrieb einer Zapfwellenantriebseinheit.

Bevorzugt ist ein Sonnenrad des Planetenradgetriebes mit der zweiten Abtriebswelle um die Drehachse D gemeinsam umlaufend verbunden. Hierdurch kann die zweite Abtriebswelle von dem Planetenradgetriebe unmittelbar reversierend angetrieben werden. In weiterhin bevorzugter Ausgestaltung ist die zweite Kupplung radial innerhalb der ersten Kupplung angeordnet ist. Hierdurch wird eine axial kurze Baulänge erzielt.

Bevorzugt handelt es sich bei der im Kraftfluss nachgeordneten Getriebeeinheit um ein Stirnradgetriebe mit zwei Vorgelegewellen, wobei die erste Vorgelegewelle mit der ersten Abtriebswelle der Getriebe-Kupplungseinheit und die zweite Vorgelegewelle mit der zweiten Abtriebswelle der Getriebe-Kupplungseinheit antriebsverbunden ist. Unter Voreinlegen ist zu verstehen, dass auf der Vorgelegewelle, die nicht antriebsmäßig über die ersten oder die zweite Kupplung mit der Eingangswelle verbunden ist, die Zahnräder der als nächstes einzulegenden Gangstufe bereits antriebsmäßig mit dieser Vorgelegewelle verbunden werden. Weiterhin bevorzugt handelt es sich bei der ersten Betriebsrichtung um eine Vorwärtsfahrrichtung eines landwirtschaftlichen Arbeitsfahrzeugs, in welchem die Getriebeanordnung Teil eines Antriebsstrangs ist.

Durch das erfindungsgemäße Verfahren wird für die Funktion des ständigen Reversierens eine Fahrstrategie bereitgestellt, durch die der Verzicht auf eine weitere Kupplung bei der erfindungsgemäßen Getriebe-Kupplungseinheit gegenüber dem beschriebenen Stand der Technik ausgeglichen wird, indem aus jeder in der ersten Betriebsrichtung eingelegten Gangstufe ohne Zugkraftunterbrechung in die zweite Betriebsrichtung reversiert werden kann.

In bevorzugter Ausgestaltung des Verfahrens erfolgt ab einer eine Grenzdrehzahl überschreitenden Eingangsdrehzahl ein Voreinlegen einer zweiten Gangstufe, die ein gegenüber der ersten Gangstufe kleineres Übersetzungsverhältnis aufweist. Hierbei kann das Einlegen eines kleineren Übersetzungsverhältnisses mit dem Einlegen eines höheren Ganges bezeichnet werden. Hierdurch ergibt sich für die Bedienperson insgesamt ein erwartungsgemäßes Schaltverhalten.

Bevorzugt wird ab der Grenzdrehzahl überwiegend zeitgleich mit dem Reversieren in die zweite Betriebsrichtung die an der Eingangswelle anliegende Eingangsdrehzahl reduziert. Hierdurch kann ein gleicher Geschwindigkeitsbetrag in der ersten und der zweiten Betriebsrichtung trotz der zwischen den Gangstufen unterschiedlichen Übersetzungsverhältnisse gewährleistet werden.

In weiterhin bevorzugter Ausgestaltung des Verfahrens erfolgt bis zu einer eine Grenzdrehzahl unterschreitenden Eingangsdrehzahl ein Voreinlegen einer zweiten Gangstufe, die ein gegenüber der ersten Gangstufe größeres Übersetzungsverhältnis aufweist. Hierbei kann das Einlegen eines größeren Übersetzungsverhältnisses mit dem Einlegen eines niedrigeren Ganges bezeichnet werden. Hierdurch ergibt sich für die Bedienperson auch in einem niedrigen Drehzahlbereich ein erwartungsgemäßes Schaltverhalten. Bevorzugt wird bis zu der Grenzdrehzahl überwiegend zeitgleich mit dem Reversieren in die zweite Betriebsrichtung die an der Eingangswelle anliegende Eingangsdrehzahl erhöht. Hierdurch kann ein gleicher Geschwindigkeitsbetrag in der ersten und der zweiten Betriebsrichtung trotz der zwischen den Gangstufen unterschiedlichen Übersetzungsverhältnisse gewährleistet werden.

Ein bevorzugtes Ausführungsbeispiel der Getriebe-Kupplungseinheit zusammen mit dem erfindungsgemäßen Verfahren zur Steuerung einer Getriebeanordnung wird anhand der Figur beschrieben.

Die Figur zeigt ein Getriebeschema einer Getriebeanordnung 60, die eine erfindungsgemäße Getriebe-Kupplungseinheit 10 und eine im Kraftfluss nachgeordnete Getriebeeinheit 50 umfasst. Die Getriebeeinheit 50 ist als Stirnradgetriebe mit einer ersten Vorgelegewelle 54 und einer zweiten Vorgelegewelle 56 ausgeführt. Auf jeder der Vorgelegewellen 54, 56 sind jeweils vier Zahnräder 58₁ - 58₄, 60₁ - 60₄ drehbar und jeweils zwei Schaltvorrichtungen 62₁, 62₂, 64₁, 64₂ drehfest gehalten. Über die Schaltvorrichtungen 62₁, 62₂, 64₁, 64₂ können die Zahnräder 58₁ - 58₄, 60₁ - 60₄ in nicht näher zu beschreibender Weise mit der entsprechenden Vorgelegewelle 54, 56 drehfest verbunden werden. Die Zahnräder 58₁ - 58₄, 60₁ - 60₄ stehen in einer aus der Figur ersichtlichen Weise mit drehfest auf einer Getriebeausgangswelle 52 der Getriebeeinheit 50 angeordneten Zahnrädern 66₁ - 66₄ in einem Verzahnungseingriff.

Durch die soeben beschriebene Anordnung weist die Getriebeeinheit 50 auf den Vorgelegewellen 54, 56 jeweils vier Gangstufen auf, wobei für die Zwecke der vorliegenden Beschreibung der ersten Vorgelegewelle 54 die ungeraden Gangstufen eins, drei, fünf und sieben zugeordnet sind und der zweiten Vorgelegewelle 56 die geraden Gangstufen zwei, vier, sechs und acht zugeordnet sind. Weder die Anzahl der Gangstufen, noch deren Zuordnung zu den Vorgelegewellen 54, 56 ist erfindungsgemäß zwingend.

Die Getriebe-Kupplungseinheit 10 weist ein Planetenradgetriebe 26 mit einer Rückwärtskupplung 32, eine erste Kupplung 20 und eine zweite Kupplung 22 auf. Die Rückwärtskupplung ist funktional betrachtet eine Bremse und kann dementsprechend auch als Rückwärtsbremse bezeichnet werden. Zum Antrieb der Getriebe-Kupplungseinheit 10 ist eine Eingangswelle 12 vorgesehen, die somit eine Drehachse D definiert. Das Planetenradgetriebe 26 und die Kupplungen 20, 22 sind bevorzugt axial versetzt zueinander angeordnet. Die Eingangswelle 12 ist antriebsmäßig und um die Drehachse D gemeinsam umlaufend mit einem Planetenradträger 28 des Planetenradgetriebes 26 verbunden. Die Eingangswelle 12 ist ebenfalls antriebsmäßig und um die Drehachse D gemeinsam umlaufend mit einem gemeinsamen Kupplungsantriebselement 24 der beiden Kupplungen 20, 22 verbunden. Hierdurch ist, wie dies erfindungsgemäß vorgesehen ist, der Planetenradträger 28 mit dem Kupplungsantriebselement 24 um die durch die Eingangswelle 12 definierte Drehachse D gemeinsam umlaufend verbunden.

Die erste Kupplung 20 ist bevorzugt radial außerhalb der zweiten Kupplung 22 angeordnet. Über die ersten Kupplung 20 kann eine erste Abtriebswelle 16 der Getriebe-Kupplungseinheit 10 bedarfsweise angetrieben werden und über die zweite Kupplung 22 kann eine bevorzugt koaxial innerhalb der ersten Antriebswelle 16 angeordnete zweite Abtriebswelle 18 der Getriebe-Kupplungseinheit 10 bedarfsweise angetrieben werden. Bedarfsweise bedeutet, dass eine Ansteuerung der jeweiligen Kupplung 20, 22 durch eine nicht näher zu beschreibende elektronische Steuerung erfolgt, in Abhängigkeit der erforderlichen Gangstufe oder eines Wechsels der Gangstufe in der Getriebeeinheit 50. Die erste Abtriebswelle 16 ist über eine erste Stirnradverzahnung 68 mit der ersten Vorgelegewelle 54 antriebsverbunden und die zweite Abtriebswelle 18 ist über eine zweite Stirnradverzahnung 70 mit der zweiten Vorgelegewelle 56 antriebsverbunden.

Die zweite Abtriebswelle 18 ist antriebsmäßig und um die Drehachse D gemeinsam umlaufend mit einem Sonnenrad 36 des Planetenradgetriebes 26 verbunden, so dass die zweite Abtriebswelle 18 von der Eingangswelle 12 entweder über die zweite Kupplung 22 oder über das Planetenradgetriebe 26 um die Drehachse D angetrieben werden kann. Der Antrieb über das Planetenradgetriebe 26 erfolgt dann, wenn die zweite Kupplung 22 geöffnet ist und ein Hohlrad 30 des Planetenradgetriebes 26 über die Rückwärtskupplung 32 gegenüber einem nur symbolisch angedeuteten Gehäuse 34 der Getriebe-Kupplungseinheit 10 gegen Drehung um die Drehachse D arretierbar ist. In diesem Schaltzustand der Kupplungen 22, 32 erfolgt ein Antrieb der zweiten Abtriebswelle 18 in entgegengesetzter Drehrichtung zu der Eingangswelle 12.

Zusammenfassend lassen sich demnach die folgenden Schaltzustände innerhalb der Getriebe-Kupplungseinheit 10 unterscheiden:
Neutral: Alle Kupplungen 20, 22, 32 sind geöffnet und es besteht keine antriebsmäßige Verbindung zwischen der Eingangswelle 12 und den Abtriebswellen 16, 18.
Niedriger Vorwärtsantrieb: Lediglich die erste Kupplung 20 ist geschlossen und es besteht eine antriebsmäßige Verbindung zwischen der Eingangswelle 12 und der ersten Abtriebswelle 16.
Hoher Vorwärtsantrieb: Lediglich die zweite Kupplung 22 ist geschlossen und es besteht eine antriebsmäßige Verbindung zwischen der Eingangswelle 12 und der zweiten Abtriebswelle 18.
Rückwärts: Lediglich die Rückwärtskupplung 32 ist geschlossen und es besteht eine reversierende, dass heißt die Drehrichtung umkehrende, antriebsmäßige Verbindung zwischen der Eingangswelle 12 und der zweiten Abtriebswelle 18.

Somit ist die erfindungsgemäße Getriebe-Kupplungseinheit 10 bei reinem Vorwärtsantrieb in der Lage in Zusammenspiel mit der nachfolgenden Getriebeeinheit 50 eine volle Doppelkupplungsfunktion bereitzustellen. Fährt das landwirtschaftliche Arbeitsfahrzeug beispielsweise in Vorwärtsrichtung, die als erste Betriebsrichtung definiert sein kann, in der ersten Gangstufe und beschleunigt, so erfolgt ein Kraftfluss von der Eingangswelle 12 über die erste Kupplung 20, über die erste Abtriebswelle 16 auf die erste Vorgelegewelle 54, die die erste Gangstufe trägt. Der Abtrieb erfolgt von der ersten Gangsstufe über die Getriebeausgangswelle 52. Parallel beziehungsweise zeitgleich ist auf der zweiten Vorgelegewelle 56 bereits die zweite Gangstufe voreingelegt, wobei infolge der noch geöffneten zweiten Kupplung 22 der Kraftfluss zu der Eingangswelle 12 unterbrochen ist. Ein Schalten von der ersten Gangstufe in die zweite Gangstufe, unter Beibehaltung der Vorwärtsrichtung, kann demnach ohne Unterbrechung der Zugkraft erfolgen, indem zeitgleich die ersten Kupplung 20 geöffnet und die zweite Kupplung 22 geschlossen werden.

Beim ständigen Reversieren ist ein Fahren des landwirtschaftlichen Arbeitsfahrzeugs in der ersten Betriebsrichtung, die auch hier beispielhaft die Vorwärtsrichtung ist, in einer geraden Gangstufe zu unterscheiden vom Fahren in der ersten Betriebsrichtung in einer ungeraden Gangstufe. Fahren in erster Betriebsrichtung mit gerader Gangstufe ist im Hinblick auf das Schalten vergleichbar mit dem zuvor beschriebenen reinen Vorwärtsbetrieb. Fahren in einer geraden Gangstufe bedeutet einen Kraftfluss von der Eingangswelle 12 über die zweite Kupplung 22 auf die zweite Vorgelegewelle 56, die die geraden Gangstufen trägt. Ein Reversieren kann demnach ohne Unterbrechung der Zugkraft erfolgen, indem zeitgleich die zweite Kupplung 22 geöffnet und die Rückwärtskupplung 32 geschlossen werden.

Das erfindungsgemäße Verfahren zur Steuerung der Getriebeanordnung 60 gewährleistet nun, dass auch aus der ersten Betriebsrichtung mit ungerader Gangstufe ohne Zugkraftunterbrechung in die zweite Betriebsrichtung reversiert werden kann. Fahren in einer ungeraden Gangstufe bedeutet einen Kraftfluss von der Eingangswelle 12 über die erste Kupplung 20 auf die erste Vorgelegewelle 56, die die ungeraden Gangstufen trägt. Ein Reversieren, dass heißt zeitgleiches Öffnen der ersten Kupplung 20 und Schließen der Rückwärtskupplung 32, erfolgt demnach erfindungsgemäß ohne Zugkraftunterbrechung in eine gerade Gangstufe, die von der zweiten Vorgelegewelle 56 getragen werden. Zum Ausgleich der unterschiedlichen Übersetzungen der in der ersten Betriebsrichtung eingelegten ungeraden Gangstufe und der in der zweiten Betriebsrichtung eingelegten geraden Gangstufe wird erfindungsgemäß die an der Eingangswelle 12 anliegende Eingangsdrehzahl n_{E} angepasst, um eine für die zweite Betriebsrichtung vorgesehene Ausgangsdrehzahl n_{A} der Getriebeausgangswelle 52 einzustellen. Hierbei wird die Ausgangsdrehzahl n_{A} der Getriebeausgangswelle 52 in Abhängigkeit einer gewünschten Fahrzeuggeschwindigkeit in der zweiten Betriebsrichtung im Vergleich zu der Fahrgeschwindigkeit in der ersten Betriebsrichtung eingestellt.

Bevorzugt erfolgt eine Einstellung der an der Eingangswelle 12 anliegenden Eingangsdrehzahl n_{E} derart, dass die Beträge der Fahrzeuggeschwindigkeiten in den beiden Betriebsrichtungen gleich sind. Weiterhin bevorzugt erfolgt die Einstellung der Eingangsdrehzahl n_{E} durch Veränderung einer Motordrehzahl eines Verbrennungsmotors, dessen Antriebsleistung über die Getriebeanordnung 60 und noch weitere Bestandteile eines Antriebsstrang, wie beispielsweise ein Differentialgetriebe, an Antriebsräder des landwirtschaftlichen Arbeitsfahrzeugs geleitet wird.

Fährt das landwirtschaftliche Arbeitsfahrzeug beispielsweise in einer Vorwärtsrichtung in der siebten Gangstufe mit einer Eingangsdrehzahl n_{E} an der Eingangswelle 12 von 1800 U/min und einer Geschwindigkeit von 25km/h, so ist nach dem Reversieren die achte Gangstufe eingelegt, wobei die Geschwindigkeit in Rückwärtsrichtung immer noch 25km/h beträgt, die Eingangsdrehzahl n_{E} an der Eingangswelle 12 allerdings durch Reduzierung der Motordrehzahl auf etwa 1475 U/min gesenkt wurde. Das Maß der Reduzierung der Motordrehzahl ergibt sich aus dem Verhältnis der Übersetzung der siebten Gangstufe zur Übersetzung der achten Gangstufe. So ergibt sich z.B. mit i7 = 0,976 und mit i8 = 0,8 ein Verhältnis von i7/i8 = 1,22. Die Motordrehzahl wird um den Faktor 1,22 gesenkt, damit die Fahrgeschwindigkeit nach dem Reversieren aus dem siebten Gang gleich bleibt.

### Bezugszeichenliste

- 10: Getriebe-Kupplungseinheit
- 12: Eingangswelle
- 16: erste Abtriebswelle
- 18: zweite Abtriebswelle
- 20: erste Kupplung
- 22: zweite Kupplung
- 24: Kupplungsantriebselement
- 26: Planetenradgetriebe
- 28: Planetenradträger
- 30: Hohlrad
- 32: Rückwärtskupplung
- 34: Gehäuse
- 36: Sonnenrad
- 50: Getriebeeinheit
- 52: Getriebeausgangswelle
- 54: erste Vorgelegewelle
- 56: zweite Vorgelegewelle
- 58₁ - 58₄: Zahnrad
- 60₁ - 60₄: Zahnrad
- 62₁, 62₂: Schaltvorrichtung
- 64₁, 64₂: Schaltvorrichtung
- 66₁ - 66₄: Zahnrad
- 68: Stirnradverzahnung
- 70: Stirnradverzahnung
- n_{E}: Eingangsdrehzahl
- n_{A}: Ausgangsdrehzahl
- D: Drehachse

## Patentansprüche

1. Verfahren zur Steuerung einer Getriebeanordnung (60) mit einer Getriebe-Kupplungseinheit (10), umfassend eine Eingangswelle (12) zum Antrieb der Getriebe-Kupplungseinheit (10), eine erste und eine zweite Abtriebswelle (16, 18), die zum Antrieb mit einer im Kraftfluss nachgeordneten Getriebeeinheit verbindbar sind, eine erste und eine zweite Kupplung (20, 22) mit einem gemeinsamen Kupplungsantriebselement (24), wobei die erste Abtriebswelle (16) über die erste Kupplung (20) und die zweite Abtriebswelle (18) über die zweite Kupplung (22) mit der Eingangswelle (12) bedarfsweise antriebsmäßig verbindbar sind, ein Planetenradgetriebe (26) mit einem Hohlrad (30) und einem Planetenradträger (28), wobei das Hohlrad (30) über eine Rückwärtskupplung (32) gegenüber einem feststehenden Gehäuse (34) der Getriebe-Kupplungseinheit (10) gegen Drehung arretierbar ist, zur reversierenden Antriebsverbindung der Eingangswelle (12) mit der zweiten Abtriebswelle (18), **dadurch gekennzeichnet, dass** der Planetenradträger (28) mit dem Kupplungsantriebselement (24) um eine durch die Eingangswelle (12) definierte Drehachse D gemeinsam umlaufend verbunden ist, wobei der Getriebe-Kupplungseinheit (10) im Kraftfluss eine Getriebeeinheit (50) mit mehreren Gangstufen und einer Getriebeausgangswelle (52) nachgeordnet ist, wobei zumindest eine erste Gangstufe von der ersten Abtriebswelle (16) und zumindest eine zweite Gangstufe von der zweiten Abtriebswelle (18) antreibbar ist, mit den Schritten: Antreiben der zumindest einen ersten Gangstufe über die erste Abtriebswelle (16) in einer ersten Betriebsrichtung, Voreinlegen der zumindest einen von der zweiten Abtriebswelle (18) antreibbaren zweiten Gangstufe, Reversieren von der ersten Betriebsrichtung in eine zweite Betriebsrichtung und Antrieben der zumindest einen zweiten Gangstufe über die zweite Abtriebswelle (18), sowie Anpassen einer an der Eingangswelle (12) anliegenden Eingangsdrehzahl (n_{E}), mit dem Ziel eine für die zweite Betriebsrichtung vorgesehene Ausgangsdrehzahl (n_{A}) der Getriebeausgangswelle (52) einzustellen, um unterschiedliche Übersetzungen in der ersten Gangstufe und der zweiten Gangstufe auszugleichen.

2. Verfahren zur Steuerung nach Anspruch 1, **dadurch gekennzeichnet, dass** ab einer eine Grenzdrehzahl (n_{E,Grenz}) überschreitenden Eingangsdrehzahl (n_{E}) ein Voreinlegen einer zweiten Gangstufe erfolgt, die ein gegenüber der ersten Gangstufe kleineres Übersetzungsverhältnis aufweist.

3. Verfahren zur Steuerung nach Anspruch 2, **dadurch gekennzeichnet, dass** ab der Grenzdrehzahl (n_{E,Grenz}) überwiegend zeitgleich mit dem Reversieren in die zweite Betriebsrichtung die an der Eingangswelle (12) anliegende Eingangsdrehzahl (n_{E}) reduziert wird.

4. Verfahren zur Steuerung nach einem der Ansprüche 1 bis 3, **dadurch gekennzeichnet, dass** bis zu einer eine Grenzdrehzahl (n_{E,Grenz}) unterschreitenden Eingangsdrehzahl (n_{E}) ein Voreinlegen einer zweiten Gangstufe erfolgt, die ein gegenüber der ersten Gangstufe größeres Übersetzungsverhältnis aufweist.

5. Verfahren zur Steuerung nach Anspruch 4, **dadurch gekennzeichnet, dass** bis zu der Grenzdrehzahl (n_{E,Grenz}) überwiegend zeitgleich mit dem Reversieren in die zweite Betriebsrichtung die an der Eingangswelle (12) anliegende Eingangsdrehzahl (n_{E}) erhöht wird.

## Claims

1. Control method for a transmission arrangement (60) having a transmission clutch unit (10), comprising an input shaft (12) for driving the transmission clutch unit (10), a first and a second output shaft (16, 18) which can be connected, for the purpose of providing drive, to a transmission unit which is arranged downstream in the force flux, a first and second clutch (20, 22) with a common clutch drive element (24), wherein the first output shaft (16) can be connected in terms of drive as required to the input shaft (12) via the first clutch (20) and the second output shaft (18) can be connected in terms of drive as required to the input shaft (12) via the second clutch (22), a planetary gear mechanism (26) with a ring gear (30) and a planetary gear carrier (28), wherein the ring gear (30) can be locked against rotation with respect to a fixed housing (34) of the transmission clutch unit (10) by means of a reverse clutch (32), in order to bring about a reversing drive connection of the input shaft (12) to the second output shaft (18), **characterized in that** the planetary gear carrier (28) is connected so as to circulate together with the clutch drive element (24) about a rotation axis (D) which is defined by the input shaft (12), wherein a transmission unit (50) with a plurality of gear stages and a transmission output shaft (52) is arranged downstream of the transmission clutch unit (10) in the force flux, wherein at least one first gear stage can be driven by the first output shaft (16) and at least one second gear stage can be driven by the second output shaft (18), comprising the steps: driving the at least one first gear stage via the first output shaft (16) in a first operating direction, pre-engaging the at least one second gear stage which can be driven by the second output shaft (18), reversing from the first operating direction into a second operating direction, and the driving the at least one second gear stage via the second output shaft (18) as well as adjusting an input rotational speed (n_{E}) which is present at the input shaft (12), with the objective of setting an output rotational speed (n_{A}) of the transmission output shaft (52) which is provided for the second operating direction, in order to compensate different transmission ratios in the first gear stage and in the second gear stage.

2. Control method according to Claim 1, **characterized in that** starting from an input rotational speed (n_{E}) which exceeds a limiting rotation speed (n_{E. Limit}) a second gear stage which has a lower transmission ratio than the first gear stage is pre-engaged.

3. Control method according to Claim 2, **characterized in that** starting from the limiting rotation speed (n_{E. Limit}) the input rotational speed (n_{E}) which is present at the input shaft (12) is reduced mainly at the same time as the reversing in the second operating direction.

4. Control method according to one of Claims 1 to 3, **characterized in that** pre-engagement of a second gear stage which has a higher transmission ratio than the first gear stage takes place up to an input rotational speed (n_{E}) which undershoots a limiting rotational speed (n_{E. Limit}).

5. Control method according to Claim 4, **characterized in that** the input rotational speed (n_{E}) which is present at the input shaft (12) is increased up to the limiting rotational speed (n_{E. Limit}) mainly at the same time as the reversing in the second operating direction.

## Revendications

1. Procédé de commande d'un système de transmission (60) comportant une unité de transmission -embrayage (10), comprenant un arbre d'entrée (12) destiné à entraîner l'unité de transmission-embrayage (10), des premier et deuxième arbres de sortie (16, 18) qui peuvent être reliés à une unité de transmission disposée en aval dans le sens de transmission des forces à des fins d'entraînement, des premier et deuxième embrayages (20, 22) comportant un élément d'entraînement d'embrayage (24), dans lequel il est possible de relier à l'arbre d'entrée (12) à des fins d'entraînement et en fonction des besoins, le premier arbre de sortie (16), par l'intermédiaire du premier embrayage (20), et le deuxième arbre de sortie (18), par l'intermédiaire du deuxième embrayage (22), une transmission à engrenage planétaire (26) comprenant un engrenage solaire (30) et un porte-satellites (28), dans lequel l'engrenage solaire (30) peut être empêché de tourner par l'intermédiaire d'un embrayage arrière (32) par rapport à un boîtier fixe (34) de l'unité de transmission-embrayage (10), afin de relier l'arbre d'entrée (12) au deuxième arbre de sortie (18) de manière à l'entraîner en sens inverse, **caractérisé en ce que** le porte-satellites (28) est relié à l'élément d'entraînement d'embrayage (24) de manière à tourner de façon solidaire autour d'un axe de rotation D défini par l'arbre d'entrée (12), dans lequel une unité de transmission (50) ayant plusieurs rapports de vitesse et un arbre de sortie de transmission (52) est disposée en aval de l'unité de transmission-embrayage (10) dans le sens de transmission des forces, dans lequel au moins un premier rapport de vitesse peut être entraîné par le premier arbre de sortie (16) et au moins un deuxième rapport de vitesse peut être entraîné par le deuxième arbre de sortie (18), comprenant les étapes consistant à : entraîner l'au moins un premier rapport de vitesses par l'intermédiaire du premier arbre de sortie (16) dans un premier sens de fonctionnement, pré-engager l'au moins un deuxième rapport de vitesse pouvant être entraîné par le deuxième arbre de sortie (18), inverser le premier sens de fonctionnement en un deuxième sens de fonctionnement et entraîner l'au moins un deuxième rapport de vitesses par l'intermédiaire du deuxième arbre de sortie (18), et adapter une vitesse de rotation d'entrée (n_{E}) appliquée à l'arbre d'entrée (12) dans le but de régler une vitesse de rotation de sortie (n_{A}) de l'arbre de sortie de transmission (52), prévue pour le deuxième sens de fonctionnement, afin d'équilibrer différents rapports de conversion dans le premier rapport de vitesse et le deuxième rapport de vitesse.

2. Procédé de commande selon la revendication 1, **caractérisé en ce qu'**à partir d'une vitesse de rotation d'entrée (n_{E}) dépassant une vitesse de rotation limite (n_{E,Grenz}), il se produit un pré-engagement d'un deuxième rapport de vitesse qui présente un rapport de conversion inférieur à celui du premier rapport de vitesse.

3. Procédé de commande selon la revendication 2, **caractérisé en ce qu'**à partir de la vitesse de rotation limite (n_{E,Grenz}), la vitesse de rotation d'entrée (n_{E}) appliquée à l'arbre d'entrée (12) est réduite de manière sensiblement simultanée à l'inversion dans le deuxième sens de fonctionnement.

4. Procédé de commande selon l'une quelconque des revendication 1 à 3, **caractérisé en ce que**, jusqu'à une vitesse de rotation d'entrée (n_{E}) inférieure à une vitesse de rotation limite (n_{E,Grenz}), il se produit un pré-engagement d'un deuxième rapport de vitesse qui présente un rapport de conversion supérieur à celui du premier rapport de vitesse.

5. Procédé de commande selon la revendication 4, **caractérisé en ce que**, jusqu'à la vitesse de rotation limite (n_{E,Grenz}), la vitesse de rotation d'entrée (n_{E}) appliquée à l'arbre d'entrée (12) est augmentée de manière sensiblement simultanée à l'inversion dans le deuxième sens de fonctionnement.
